# EUROPEAN PATENT SPECIFICATION

(11) **EP 3 163 590 B1**
(45) Date of publication and mention of the grant of the patent: **13.06.2018**
(21) Application number: 15465554.2
(22) Date of filing: 27.10.2015
(51) Int. Cl.: H01F 38/14, H01F 27/28, H02J 50/10, H02J 50/90

(54) **COIL POSITIONING DEVICE**
SPULENPOSITIONIERUNGSVORRICHTUNG
DISPOSITIF DE POSITIONNEMENT DE BOBINE

(43) Date of publication of application: 03.05.2017
(73) Proprietor: Continental Automotive GmbH, 30165 Hannover (DE)
(72) Inventor: MARIU, Stefan, 707515 Tomesti / Iasi (RO); CORNESCHI, Bogdan, 717110 Curtesti (RO); VORNICU, Vlad, 705200 Pascani (RO)

(56) References cited:
- EP-A1- 1 061 631
- WO-A1-2012/081519
- US-A1- 2013 234 662

## Description

The invention relates to a coil positioning device for a wireless charging system.

US 2013/234662 A1 discloses a coil positioning device for a wireless charging system, the coil positioning device comprising a supporting element configured to support an energy transfer coil, a lower linear guide arranged movably in a first direction and configured to slidingly guide the supporting element in a second direction substantially perpendicular to the first direction, an upper linear guide arranged movably in the second direction and configured to slidingly guide the supporting element in the first direction, wherein the supporting element is slidingly engaged with the upper linear guide at an upper coupling section thereof, wherein the supporting element is slidingly engaged with the lower linear guide at a lower coupling section thereof wherein the upper linear guide comprises an elongate opening extending in the second direction.

A demanding task in developing wireless charging systems is the exact positioning of associated coils with respect to each other. Wireless charging systems have been developed in which the position of the charging coil is variable. More precisely, such systems allow a movement of the charging coil with respect to the receiving coil in order to precisely position the charging coil. It is the object of the invention to provide an enhanced coil positioning device.

According to the invention, a coil positioning device for a wireless charging system is provided. The coil positioning device comprises a supporting element configured to support an energy transfer coil. Furthermore, the coil positioning device comprises a lower linear guide arranged movably in a first direction and configured to slidingly guide the supporting element in a second direction substantially perpendicular to the first direction. Moreover, the coil positioning device comprises an upper linear guide arranged movably in the second direction and configured to slidingly guide the supporting element in the first direction wherein the supporting element is slidingly engaged with the upper linear guide at an upper coupling section thereof and is slidingly engaged with the lower linear guide at a lower coupling section thereof. Furthermore, the upper linear guide comprises an elongate opening extending in the second direction and the supporting element is partially accommodated in the elongate opening.

Accordingly, the coil positioning device comprises a mechanism in which the supporting element is movable by two linear guides which are movable in directions substantially perpendicular to each other and each being configured to guide the supporting element in a direction substantially perpendicular to their movement direction. By this, a positioning mechanism is provided which allows a two dimensional positioning of the supporting element. The supporting element is coupled to the linear guides at two different coupling sections. Consequently, a reliable and slidingly coupling to the linear guides is provided. The upper linear guide comprises an elongate opening in which the supporting element is at least partially accommodated. Accordingly, the supporting element can extend through the elongate opening provided in the upper linear guide.

At least one of the lower linear guide and the upper linear guide comprise guiding recesses for guiding the supporting element and each of the lower coupling section and the upper coupling section comprises a protrusion formed on the outer circumference of the supporting element. Each protrusion is formed to engage with a corresponding guiding recess formed in the lower linear guide and the upper linear guide, respectively.

Accordingly, and engagement between the supporting element and the guiding recesses formed in the linear guides is achieved by protrusions provided on the outer circumference of the supporting element. In other words, the guiding recesses formed in the linear guides can be provided such that they are oriented towards the supporting element and the protrusions formed in the supporting element protrude into such guiding recesses. In this way, a compact and robust structure is achieved which at the same time allows precise guiding of the supporting element.

Preferably, at least one of the upper linear guide and the lower linear guide has a C-shaped cross-section.

Such a C-shaped cross-section provides two guiding recesses which face each other and allow a precise guiding of the supporting element. Advantageously, the linear guides comprising the C-shaped cross section are arranged in such a way in the coil positioning device that they are open towards an energy transfer coil supported by the supporting element. Preferably, the linear guides are oriented in the coil positioning device such that the C-shaped cross-section is open in the upward direction. In the present context, the upward direction is to be understood as the direction in which the energy transfer from the coil is intended to be done.

The lower linear guide and the upper linear guide can be driven by respective lead screw drives wherein the lower linear guide and the upper linear guide are operatively coupled to respective lead screws of the lead screw drives at first end portions thereof. Accordingly, each linear guide can be coupled to the lead screw at a first end thereof. For example, a threaded opening can be provided on one end of each linear guide and the respective lead screw can be engagingly passed through the threaded opening such that a rotation of lead screw effects a linear movement of the corresponding linear guide in an axial direction of the lead screw. Furthermore, the lead screw drives can be configured such that they can support the first end portion of the respective linear guide. In this case, the first end portion of the respective linear guide does not need to be additionally supported in a different manner. In an alternative, the lower linear guide and the upper linear guide can be driven by a different means of actuation, e.g. a toothed belt, that effects the same movement to the linear guides as the lead screw drives described above. Preferably, the coil positioning device further comprises a housing which is configured to support the lower linear guide and the upper linear guide at second end portions thereof. In other words, the second end portions of the linear guides can be directly supported on the housing. For example, this can be achieved by providing the housing with a suitable guiding means, for instance a guiding rail or shaft.

The supporting element can further comprise a supporting section at an upper end thereof and the coil positioning device can further comprise an energy transfer coil directly or indirectly mounted on the supporting section.

In this embodiment, a printed circuit board, further named coil printed circuit board, is mounted on the supporting section between the supporting element and the energy transfer coil. In this case, the energy transfer coil is indirectly supported on the supporting element.

The coil positioning device can further comprise a detection printed circuit board for detecting a mating energy transfer coil and the detection printed circuit board can be configured to detect the mating energy transfer coil within a movement range of the energy transfer coil supported on the supporting element. For example, it is possible to arrange such a detection printed circuit board above the energy transfer coil. The detection printed circuit board can comprise a dimension substantially corresponding to the movement range of the energy transfer coil and can be configured to be able to precisely locate the position of a mating energy transfer coil.

The energy transfer coil can be an emitter coil. In this case, the coil positioning system can form the stationary part of wireless charging system.

Furthermore, a vehicle charging device comprising a coil positioning system as described above is disclosed.
Figure 1 shows an exploded view of the coil positioning device according to a first embodiment of the present subject matter;
Figure 2 shows a cross sectional view in the direction of the upper linear guide; and
Figure 3 Shows a top view of the coil positioning device of Figure 1.

In the following, an embodiment will be described with reference to the drawings. It is to be noted, that the same elements are denoted with the same reference signs in all figures.

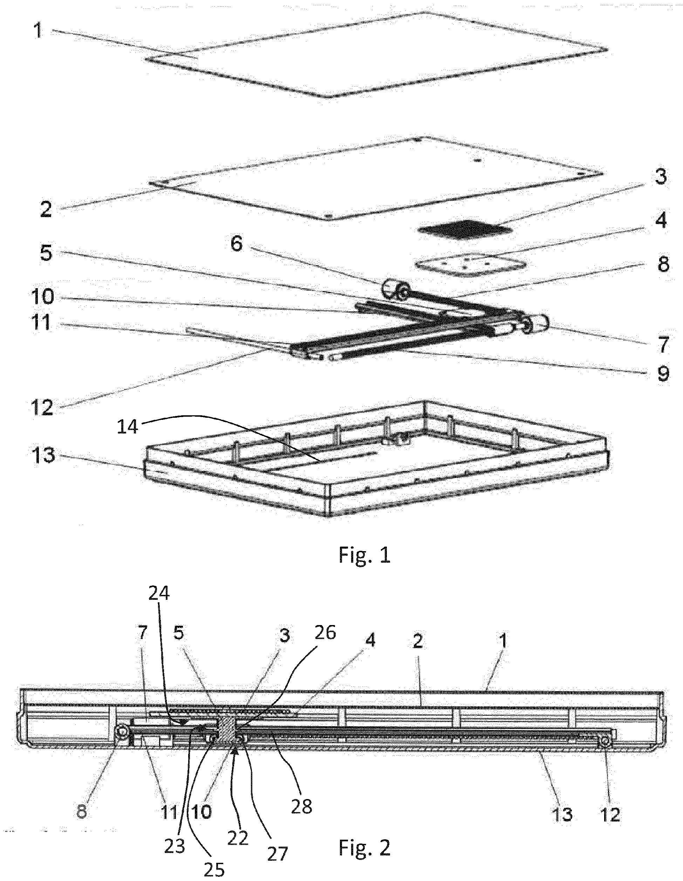

The basic elements of the coil positioning device are shown in Figure 1. In detail, Figure 1 shows a housing 13 which is designed to accommodate further elements of the coil positioning device. The housing 13 comprises a substantially rectangular shape but can generally comprise any suitable shape. The housing 13 comprises a bottom portion on which a guiding device exemplified as a rail 14 is provided. For example, in case the coil positioning device as shown in Figure 1 is part of a charging device of a wireless charging system for a vehicle, the coil positioning device can be provided on a base provided on the ground, a parking lot for instance.

As is further shown in Figure 1, the coil positioning device further comprises two linear guides 10 and 11 which are arranged substantially perpendicular with respect to each other and at different heights.

The lower linear guide 10 is driven by a lower lead screw drive 19 comprising an electric motor 7 and a drive screw 9. Furthermore, the lower linear guide 10 comprises a first end portion 15 comprising an opening with an inner thread and being engaged with the drive screw 9. In this way, the lower linear guide 10 is movable by a rotational output of the electric motor 7 along an axis of the drive screw. Moreover, the lower linear guide 10 extends in a direction substantially perpendicular to the extension direction of the axis of the drive screw 9. The use of a lead screw mechanism and a force transfer from the drive screw to the threaded opening, i.e. a screw-nut transmission, offers a good system rigidity and strength.

The lower linear guide 10 comprises a guiding portion comprising a C-shaped form being open in the upward direction in Figure 1. In other words, the guiding portion of the lower linear guide 10 comprises a substantially flat base portion and two protruding end portions being curved and extending in the upward direction in Figure 1. The protruding end portions are curved in such a manner that two lower guiding recesses 27 are formed which are facing each other. These lower guiding recesses 27 form a suitable guiding means. Furthermore, the lower linear guide 10 comprises a second end portion 16 which is adapted to support the lower linear guide 10 on the rail 14.

The upper linear guide 11 is driven by an upper lead screw drive 20 comprising an electric motor 6 and a drive screw 8. The drive screw 8 is arranged substantially perpendicular to the drive screw 9 of the lower lead screw drive 19. Similar to the lower linear guide 10, the upper linear guide 11 comprises a first end portion 17 with an opening having an inner thread and being engaged with the drive screw 8 so that the upper linear guide 11 can be translated by a rotational output of the electric motor 6. Furthermore, the upper linear guide 11 extends in a direction substantially perpendicular to the extension direction of the axis of the drive screw 8.

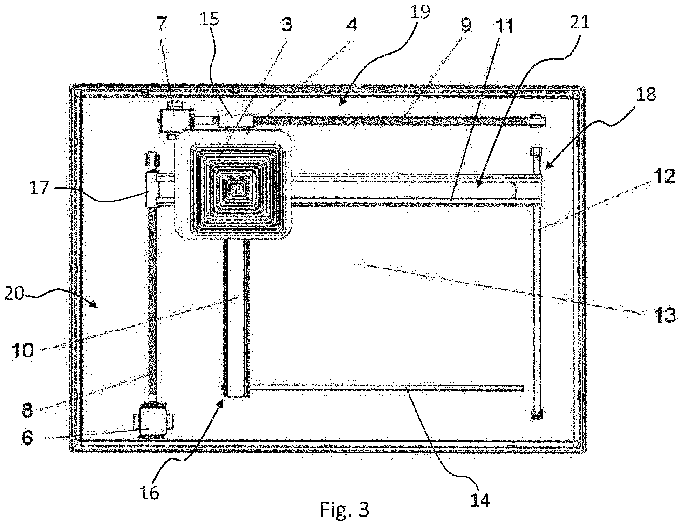

Similar to the lower linear guide 10, the upper linear guide 11 comprises a guiding portion comprising a C-shaped form being open in the upward direction in Figure 1. In other words, the guiding portion of the upper linear guide 11 comprises a substantially flat base portion and two protruding end portions being curved and extending in the upward direction in Figure 1. The protruding end portions are curved in such a manner that two upper guiding recesses 28 are formed which are facing each other. These upper guiding recesses 28 form a suitable guiding means. Furthermore, the upper linear guide 11 comprises a second end portion 18 which is adapted to support the upper linear guide 11 on a guiding shaft 12 which is supported on the housing 13. Contrary to the lower linear guide 10, the upper linear guide 11 comprises an elongate opening 21 which is formed in the extension direction of the upper linear guide 11, i.e. in a direction substantially parallel to the axis of the lead screw 9 of the lower lead screw drive 19 as is shown in Figure 3.

As is shown in Figures 1 and 2, the coil positioning device further comprises a supporting element 5 which is partially accommodated in the elongate opening 21 formed in the upper linear guide 11. In other words, the supporting element extends through the elongate opening in a vertical direction in Figures 1 and 2.

As is shown in Figure 2, the supporting element comprises a lower coupling section 22 and an upper coupling section 23, both coupling sections 22, 23 being provided for an engagement with the linear guides 10, 11, respectively. More precisely, the lower coupling section 22 comprises a lower protrusion 25 on opposite sides thereof and the upper coupling section 23 comprises upper protrusions 26 at opposite sides thereof. The lower protrusions 25 are slidingly accommodated in the lower guiding recesses 27 and the upper protrusions 26 are slidingly accommodated in the upper guiding recesses 28. In this way, the supporting element 5 is slidingly held in both linear guides 10 and 11 in such a way that a two-dimensional movement of the supporting element 5 can be effected by the operation of the lead screw drives 19 and 20. In this connection, it is noted that a strength reduction in the upper linear guide 11 due to the presence of the elongate opening 21 is compensated by presence of the supporting element 5.

In the above configuration, the supporting element 5 is moved by the pressure contact formed between the inside of the guiding recesses 27, 28 and the protrusions 25, 26. The movement of each linear guide 10, 11 induces a movement in the supporting element 5 which is parallel to the respective linear guide's movement.

On its upper end, the supporting element 5 comprises a supporting section 24. On the supporting section 24, a coil printed circuit board 4 carrying an emitter coil 3 as an example of an energy transfer coil is mounted. Thus, the emitter coil 3 and the coil printed circuit board 4 are movable by means of the supporting element 5 to which they are connected.

As is further shown in Figures 1 and 2, the coil positioning device further comprises a detection printed circuit board 2 which is arranged above the emitter coil 3. The detection printed circuit board 2 comprises a dimension covering the whole movement area of the emitter coil 3. Thus, in the present embodiment, the dimension of the detection printed circuit board 2 substantially corresponds to the area which is enclosed by the housing 13.

Above the detection printed circuit board 2, a cover 1 is provided with which the housing 13 can be closed at the upper end in order to encapsulate the above described elements of the coil positioning device therein.

The coil positioning device can be part of a vehicle charging system. In this case, the coil positioning device can be mounted on the ground allowing a vehicle to park above the same.

The coil positioning device can be operated in the following manner. As soon as the coil positioning device is activated, the position of a mating energy transfer coil, that is a receiver coil in the present embodiment, is detected by means of the detection printed circuit board 2. The position as detected by the printed circuit board 2 is translated in orthogonal coordinates by a central processing unit. After that, the motors 6 and 7 are actuated in such a manner that the position of the linear guides 10 and 11 and thus the position of the supporting element 5 carrying the emitter coil 3 is changed. More precisely, the emitter coil 3 is moved to the receiver coil's position, preferably on a straight line.

## Claims

1. Coil positioning device for a wireless charging system, the coil positioning device comprising
a supporting element (5) configured to support an energy transfer coil (3);
a lower linear guide (10) arranged movably in a first direction and configured to slidingly guide the supporting element (5) in a second direction substantially perpendicular to the first direction,
an upper linear guide (11) arranged movably in the second direction and configured to slidingly guide the supporting element (5) in the first direction,
wherein the supporting element (5) is slidingly engaged with the upper linear guide (11) at an upper coupling section (23) thereof, wherein the supporting element (5) is slidingly engaged with the lower linear guide (10) at a lower coupling section (22) thereof, wherein the upper linear guide (11) comprises an elongate opening (21) extending in the second direction, and
wherein the supporting element (5) is partially accommodated in the elongate opening (21).

2. Coil positioning device according to claim 1, wherein at least one of the lower linear guide (10) and the upper linear guide (11) comprises guiding recesses (27, 28) for guiding the supporting element (5) and wherein each of the lower coupling section (22) and the upper coupling section (23) comprise a protrusion (25, 26) formed on the outer circumference of the supporting element (5) and adapted to engage with a corresponding guiding recess (27, 28) formed in the lower guide (10) and the upper guide (11), respectively.

3. Coil positioning device according to one of the preceding claims, wherein at least one of the upper linear guide (10) and the lower linear guide (11) has a C-shaped cross section, preferably open in the upward direction.

4. Coil positioning device according to one of the preceding claims, wherein the lower linear guide (10) and the upper linear guide (11) are driven by respective lead screw drives (19, 20), wherein the lower linear guide (10) and the upper linear guide (11) are operatively coupled to respective lead screws (8, 9) of the lead screw drives (19, 20) at first end portions (15, 17) thereof, or wherein the lower linear guide (10) and the upper linear guide (11) are driven by a different means of actuation, preferably a toothed belt, that effects the same movement to the linear guides (10, 11).

5. Coil positioning device according to claim 4, further comprising a housing (13) being configured to support the lower linear guide (11) and the upper linear guide (10) at second end portions (16, 18) thereof.

6. Coil positioning device according to one of the preceding claims, wherein the supporting element (5) further comprises a supporting section (24) at an upper end thereof and wherein the coil positioning device further comprises an energy transfer coil (3) directly or indirectly mounted on the supporting section (24) .

7. Coil positioning device according to claim 6, further comprising a coil printed circuit board (4) mounted on the supporting section (24) between the supporting element (5) and the energy transfer coil (3).

8. Coil positioning device according to one of the preceding claims, further comprising a detection printed circuit board (2) for detecting a mating energy transfer coil, wherein the detection printed circuit board (2) is configured to detect the mating energy transfer coil within a movement range of the energy transfer coil (3).

9. Coil positioning device according to one of the preceding claims, wherein the energy transfer coil (3) is an emitter coil.

10. Vehicle charging device comprising a coil positioning system according to one of the preceding claims.

## Patentansprüche

1. Spulenpositionierungseinrichtung für ein drahtloses Ladesystem, wobei die Spulenpositionierungseinrichtung Folgendes aufweist:
ein Trägerelement (5), das zum Tragen einer Energieübertragungsspule (3) ausgebildet ist;
eine untere geradlinige Führung (10), die in einer ersten Richtung beweglich ausgelegt ist und die zum verschiebbaren Führen des Trägerelements (5) in einer zweiten, zu der ersten Richtung im Wesentlichen senkrechten Richtung ausgebildet ist,
eine obere geradlinige Führung (11), die in der zweiten Richtung beweglich ausgelegt ist und die zum verschiebbaren Führen des Trägerelements (5) in der ersten Richtung ausgebildet ist, wobei
das Trägerelement (5) mit der oberen geradlinigen Führung (11) in einem oberen Verbindungsabschnitt (23) von ihr verschiebbar in Eingriff ist, das Trägerelement (5) mit der unteren geradlinigen Führung (10) in einem unteren Verbindungsabschnitt (22) von ihr verschiebbar in Eingriff ist, und
das Trägerelement (5) teilweise in der langgestreckten Öffnung (21) aufgenommen ist.

2. Spulenpositionierungseinrichtung nach Anspruch 1, wobei die untere geradlinige Führung (10) und/oder die obere geradlinige Führung (11) Führungsaussparungen (27, 28) zum Leiten des Trägerelements aufweisen und der untere Verbindungsabschnitt (22) und der obere Verbindungsabschnitt (23) einen Vorsprung (25, 26) aufweisen, der an dem Außenumfang des Trägerelements (5) ausgebildet ist und der ausgelegt ist, mit einer entsprechenden Führungsaussparung (27, 28), die in der unteren Führung (10) bzw. der oberen Führung (11) ausgebildet ist, in Eingriff zu sein.

3. Spulenpositionierungseinrichtung nach einem der vorhergehenden Ansprüche, wobei die obere geradlinige Führung (10) und/oder die untere geradlinige Führung (11) einen C-förmigen Querschnitt besitzen, der vorzugsweise in der Aufwärtsrichtung offen ist.

4. Spulenpositionierungseinrichtung nach einem der vorhergehenden Ansprüche, wobei die untere geradlinige Führung (10) und die obere geradlinige Führung (11) von entsprechenden Leitspindelantrieben (19, 20) angetrieben werden, wobei die untere geradlinige Führung (10) und die obere geradlinige Führung (11) mit entsprechenden Leitspindeln (8, 9) der Leitspindelantriebe (19, 20) an ihren ersten Stirnabschnitten (15, 17) funktionstechnisch gekoppelt sind oder die untere geradlinige Führung (10) und die obere geradlinige Führung (11) von einem anderen Betätigungsmittel, vorzugsweise einem Zahnriemen, angetrieben werden, das dieselbe Bewegung auf die geradlinigen Führungen (10, 11) bewirkt.

5. Spulenpositionierungseinrichtung nach Anspruch 4, die ferner ein Gehäuse (13) aufweist, das zum Tragen der unteren geradlinigen Führung (11) und der oberen geradlinigen Führung (10) in ihren zweiten Stirnabschnitten (16, 18) ausgebildet ist.

6. Spulenpositionierungseinrichtung nach einem der vorhergehenden Ansprüche, wobei das Trägerelement (5) an seinem oberen Ende ferner einen Trägerabschnitt (24) aufweist und die Spulenpositionierungseinrichtung ferner eine Energieübertragungsspule (3), die direkt oder indirekt an dem Trägerabschnitt (24) befestigt ist, aufweist.

7. Spulenpositionierungseinrichtung nach Anspruch 6, die ferner eine gedruckte Spulenleiterplatte (4), die zwischen dem Trägerelement (5) und der Energieübertragungsspule (3) an dem Trägerabschnitt (24) befestigt ist, aufweist.

8. Spulenpositionierungseinrichtung nach einem der vorhergehenden Ansprüche, die ferner eine gedruckte Detektionsleiterplatte (2) zum Detektieren einer Verbindungsenergieübertragungsspule aufweist, wobei die gedruckte Detektionsleiterplatte (2) zum Detektieren der Verbindungsenergieübertragungsspule in einem Bewegungsbereich der Energieübertragungsspule (3) ausgebildet ist.

9. Spulenpositionierungseinrichtung nach einem der vorhergehenden Ansprüche, wobei die Energieübertragungsspule (3) eine Sendespule ist.

10. Fahrzeugladeinrichtung, die ein Spulenpositionierungssystem nach einem der vorhergehenden Ansprüche aufweist.

## Revendications

1. Dispositif de positionnement de bobine pour un système de chargement sans fil, le dispositif de positionnement de bobine comprenant :
un élément de support (5) conçu pour supporter une bobine de transfert d'énergie (3) ;
un guide linéaire inférieur (10) disposé mobile dans une première direction et conçu pour guider coulissant l'élément de support (5) dans une seconde direction sensiblement perpendiculaire à la première direction,
un guide linéaire supérieur (11) disposé mobile dans la première direction et conçu pour guider coulissant l'élément de support (5) dans la première direction,
l'élément de support (5) étant en contact coulissant avec le guide linéaire supérieur (11) au niveau d'une section d'accouplement supérieure (23) correspondante, l'élément de support (5) étant en contact coulissant avec le guide linéaire inférieur (10) au niveau d'une section d'accouplement inférieure (22) correspondante, le guide linéaire supérieur (11) comprenant une ouverture allongée (21) s'étendant dans la seconde direction, et
l'élément de support (5) étant en partie logé dans l'ouverture allongée (21).

2. Dispositif de positionnement de bobine selon la revendication 1, dans lequel le guide linéaire inférieur (10) et/ou le guide linéaire supérieur (11) comprennent des évidements de guidage (27, 28) pour guider l'élément de support (5), et la section d'accouplement inférieure (22) et la section d'accouplement supérieure (23) comprennent chacune une protubérance (25, 26) formée sur la circonférence extérieure de l'élément de support (5) et conçue pour se loger dans un évidement de guidage (27, 28) correspondant formé respectivement dans le guide inférieur (10) et le guide supérieur (11).

3. Dispositif de positionnement de bobine selon l'une quelconque des revendications précédentes, dans lequel le guide linéaire supérieur (10) et/ou le guide linéaire inférieur (11) ont une section transversale en forme de C, de préférence ouverte dans la direction vers le haut.

4. Dispositif de positionnement de bobine selon l'une quelconque des revendications précédentes, dans lequel le guide linéaire inférieur (10) et le guide linéaire supérieur (11) sont entraînés par des entraînements à vis mère (19, 20) respectifs, le guide linéaire inférieur (10) et le guide linéaire supérieur (11) étant accouplés de manière fonctionnelle aux vis mères (8, 9) respectives des entraînements à vis mère (19, 20) au niveau de premières parties extrêmes (15, 17) correspondantes, ou le guide linéaire inférieur (10) et le guide linéaire supérieur (11) étant entraînés par un moyen d'actionnement différent, de préférence une courroie dentée, qui effectue le même déplacement par rapport aux guides linéaires (10, 11).

5. Dispositif de positionnement de bobine selon la revendication 4, comprenant en outre un boîtier (13) conçu pour supporter le guide linéaire inférieur (11) et le guide linéaire supérieur (10) au niveau de secondes parties extrêmes (16, 18) correspondantes.

6. Dispositif de positionnement de bobine selon l'une quelconque des revendications précédentes, dans lequel l'élément de support (5) comprend en outre une section de support (24) au niveau d'une extrémité supérieure correspondante, et le dispositif de positionnement de bobine comprenant en outre une bobine de transfert d'énergie (3) montée directement ou indirectement sur la section de support (24).

7. Dispositif de positionnement de bobine selon la revendication 6, comprenant en outre une carte de circuit imprimé de bobine (4) montée sur la section de support (24) entre l'élément de support (5) et la bobine de transfert d'énergie (3).

8. Dispositif de positionnement de bobine selon l'une quelconque des revendications précédentes, comprenant en outre une carte de circuit imprimé de détection (2) permettant de détecter une bobine de transfert d'énergie homologue, la carte de circuit imprimé de détection (2) étant conçue pour détecter la bobine de transfert d'énergie homologue dans une plage de déplacement de la bobine de transfert d'énergie (3).

9. Dispositif de positionnement de bobine selon l'une quelconque des revendications précédentes, dans lequel la bobine de transfert d'énergie (3) est une bobine émettrice.

10. Dispositif de chargement de véhicule comprenant un système de positionnement de bobine selon l'une quelconque des revendications précédentes.
